(19) Europäisches Patentamt
European Patent Office
Office européen des brevets

(11) **EP 2 169 536 B1**

(12) **EUROPEAN PATENT SPECIFICATION**

(45) Date of publication and mention
of the grant of the patent:
**01.02.2012 Bulletin 2012/05**

(51) Int Cl.:
***G06F 7/72*** *(2006.01)*

(21) Application number: **09170264.7**

(22) Date of filing: **15.09.2009**

(54) **A method, apparatus and computer program support for regular recoding of a positive integer**

Verfahren, Vorrichtung und Computerprogrammunterstützung zur regelmäßigen Umkodierung einer positiven ganzen Zahl

Procédé, appareil et support de programme informatique pour le recodage régulier d'un entier positif

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.09.2008 EP 08305581**
**28.11.2008 EP 08291125**

(43) Date of publication of application:
**31.03.2010 Bulletin 2010/13**

(73) Proprietor: **Thomson Licensing**
**92130 Issy-les-Moulineaux (FR)**

(72) Inventor: **Joye, Marc**
**92648, Boulogne Cedex (FR)**

(74) Representative: **Ståhl, Björn Niclas et al**
**Technicolor**
**European Patent Operations**
**1-5 Rue Jeanne d'Arc**
**92130 Issy-les-Moulineaux (FR)**

(56) References cited:
**WO-A-2008/069387**

- **CAMILLE VUILLAUME ET AL: "Flexible Exponentiation with Resistance to Side Channel Attacks" APPLIED CRYPTOGRAPHY AND NETWORK SECURITY LECTURE NOTES IN COMPUTER SCIENCE;;LNCS, SPRINGER, BERLIN, DE, vol. 3989, 1 January 2006 (2006-01-01), pages 268-283, XP019034420 ISBN: 9783540347033**
- **MOELLER ET AL: "SECURING ELLIPTIC CURVE POINT MULTIPLICATION AGAINST SIDE-CHANNEL ATTACKS" INFORMATION SECURITY. INTERNATIONAL CONFERENCE: PROCEEDINGS ISC, XX, XX, 1 October 2001 (2001-10-01), pages 324-334, XP001068194**
- **DONG-GUK HAN ET AL: "Secure Signed Radix-r Recoding Methods for Constrained-Embedded Devices" INFORMATION SECURITY PRACTICE AND EXPERIENCE; [LECTURE NOTES IN COMPUTER SCIENCE;;LNCS], SPRINGER BERLIN HEIDELBERG, BERLIN, HEIDELBERG, vol. 4464, 7 May 2007 (2007-05-07), pages 238-253, XP019079260 ISBN: 9783540721598**
- **SUNG-KYOUNG KIM ET AL: "SPA Countermeasure Based on Unsigned Left-to-Right Recodings" AUTONOMIC AND TRUSTED COMPUTING; [LECTURE NOTES IN COMPUTER SCIENCE], SPRINGER BERLIN HEIDELBERG, BERLIN, HEIDELBERG, vol. 4610, 11 July 2007 (2007-07-11), pages 286-295, XP019096571 ISBN: 9783540735465**

**Description**

FIELD OF THE INVENTION

The present invention relates generally to digit recoding and, more specifically, to unsigned digit recoding.

BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Cryptographic exponentiation algorithms have been shown to be vulnerable to side channel attacks. In "Differential Power Analysis" (in M.J. Wiener, editor, Advances in Cryptology - CRYPTO '99, volume 1666 of Lecture Notes in Computer Science, pages 388-397, Springer Verlag 1999), Paul Kocher, Joshua Jaffe and Benjamin Jun describe an attack using observation of the power consumption, while attacks using observation of electromagnetic emanations have been described by Karine Gandolfi, Christophe Mourtel and Francis Olivier in "Electromagnetic Analysis: Concrete Results (in Ç.K. Koç, D. Naccache and C. Paar, editors, Cryptographic Hardware and Embedded Systems - CHES 2001, volume 2162 of Lecture Notes in Computer Science, pages 251-261, Springer Verlag 2001) and by Jean-Jacques Quisquater and David Samyde in "Electromagnetic Analysis (EMA): Measures and Counter-Measures for Smart Cards" (in I. Attali and T.P. Jensen, editors, Smart Card Programming and Security (E-Smart 2001), volume 2140 of Lecture Notes in Computer Science, pages 200-210, Springer Verlag 2001).

These attacks, called Simple Power Analysis (SPA) and Simple Electromagnetic Analysis (SEMA), can reveal the exponent used in naïvely implemented exponentiation algorithms, as the operations required are dependent on the bitwise representation of the exponent.

Recoding algorithms have been developed in order to decrease the number of operations required to compute an exponentiation. The most commonly known example is Non-Adjacent Form (NAF) recoding described by Ian Blake, Gadiel Seroussi and Nigel Smart in "Elliptic Curves in Cryptography" (volume 265 of London Mathematical Society Lecture Note Series. Cambridge University Press. 1999). NAF recoding recodes the bits of an exponent using the values in {-1, 0, 1}. This reduces the number of multiplications that are required in the subsequent exponentiation algorithm, something that can be generalised to $m$-ary recoding, as described by Donald E. Knuth in The Art of Computer Programming (volume 2 / Seminumerical Algorithms. Addison-Wesley, 2nd edition, 1981). However, these recoding algorithms are designed to increase the efficiency of the exponentiation algorithms and not to increase the resistance to side channel attacks.

Several other recoding algorithms have been proposed:

-    Bodo Möller. "Parallelizable Elliptic Curve Point Multiplication Method with Resistance against Side-Channel Attacks". In A.H. Chan and V. Gligor, editors, Information Security (ISC 2002), volume 2433 of Lecture Notes in Computer Science, pages 402-413, Springer Verlag 2002.
-    Bodo Möller. "Fractional Windows Revisited: Improved Signed-Digit Representation for Efficient Exponentiation". In C. Park and S. Chee, editors, Information Security and Cryptology - ICISC 2004, volume 3506 of Lecture Notes in Computer Science, pages 137-153, Springer Verlag 2004.
-    Katsuyuki Okeya and Tsuyoshi Takagi. "A More Flexible Countermeasure against Side-Channel Attacks Using Window Method". In C.D. Walter, Ç.K. Koç and C. Paar, editors, Cryptographic Hardware and Embedded Systems - CHES 2003, volume 2779 of Lecture Notes in Computer Science, pages 397-410, Springer Verlag 2003.
-    Katsuyuki Okeya and Tsuyoshi Takagi. "The Width-w NAF method Provides Small Memory and Fast Elliptic Scalar Multiplications Secure against Side-Channel Attacks". In M. Joye, editor, Topics in Cryptology - CT-RSA 2003, volume 2612 of Lecture Notes in Computer Science, pages 328-342, Springer Verlag 2003.

However, as noted by Yasuyuki Sakai and Kouichi Sakurai in "A New Attack with Side Channel Leakage During Exponent Recoding Computations" (In M. Joye and J.-J. Quisquater, editors, Cryptographic Hardware and Embedded Systems - CHES 2004, volume 3156 of Lecture Notes in Computer Science, pages 298-311, Springer Verlag 2004), to achieve a regular exponentiation algorithm any recoding algorithm that is used must also be regular. In a regular recoding algorithm, there is no test in the main loop during the evaluation of the algorithm.

While it could be argued that the recoding could be performed when the exponent is generated, this is for example not possible if the exponent is combined with a random value, as the recoding has to be performed just prior to the exponentiation. The combination with a random value is made to prevent certain side channel analyses, as described by Jean-Sébastien Coron in "Resistance against Differential Power Analysis for Elliptic Curve Cryptosystems" (In Ç.K. Koç and C. Paar, editors, Cryptographic Hardware and Embedded Systems - CHES '99, volume 1717 of Lecture Notes in Computer Science, pages 292-302, Springer Verlag 1999) and by Paul Kocher in "Timing Attacks on Implementations of Diffie-Heliman, RSA, DSS, and Other Systems" (In N. Koblitz, editor, Advances in Cryptology - CRYPTO '96, volume 1109 of Lecture Notes in Computer Science, pages 104-113, Springer Verlag 1996).

Other recoding algorithms have been proposed in order to make the exponentiation regular. Bodo Möller describes in "Securing Elliptic Curve Point Multiplication against Side-Channel Attacks" (In G. Davida and Y. Frankel, editors, Information Security (ISC 2001), volume 2200 of Lecture Notes in Computer Science, pages 324-334, Springer Verlag 2001) a recoding algorithm for $m$-ary exponentiation. Each digit equal to zero is replaced with -m, and the next most significant digit is incremented by one. This leads to an exponent recoded with digits comprised in the set $\{1,...,m-1\}\cup\{-m\}$. Combined with the $m$-ary exponentiation algorithm, this implies that $x^{-m}$ should be pre-computed. While this "computation is "easy" on elliptic curves, it is not the case for the multiplicative group of a finite ring.

An unsigned version of Möller's algorithm is described by Camille Vuillaume and Katsuyuki Okeya in "Flexible Exponentiation With Resistance to Side Channel Attacks" (In J. Zhou, M. Yung and F. Bao, editors, Applied Cryptography and Network Security - ACNS 2006, volume 3989 of Lecture Notes in Computer Science, pages 268-283, Springer Verlag 2006). The digits are recoded in the set $\{1,...,m\}$: each zero digit is replaced with $m$ and the next digit is decremented by one.

A drawback with the signed and the unsigned versions of Moller's algorithm is that they cannot easily be implemented in a regular manner.

It will thus be appreciated that there is a need for a recoding algorithm for regular exponentiation where the exponent is simply recoded in a regular manner. This invention provides several variants for such a solution.

## SUMMARY OF THE INVENTION

In a first aspect, the invention is directed to a regular method for recoding a first positive integer $n$ being the exponent of a cryptographic exponentiation algorithm. A processor chooses a second integer $s$ smaller than $n$, defines a third integer $n' = n - s$, and adds, for a fourth integer m, the $m$-ary representation of the third integer $n'$ digit-wise to the $m$-ary representation of $s$ to yield a recoded representation of n.

In a first preferred embodiment, $m = 2^k$. 1-2

In a second preferred embodiment, $s = \sum_{i=0}^{l-2} s_i m^i$, where $l$ denotes the $m$-ary length of $n$. It is advantageous that $s_i = \alpha$ for some $0 < \alpha < m$; where, preferably, $\alpha = 1$ or $\alpha = m-1$.

In a second aspect, the invention is directed to a device for regularly recoding a first positive integer n. The device comprises a processor adapted to: choose a second integer $s$ smaller than n; define a third integer $n' = n - s$; and add, for a fourth integer m, the $m$-ary representation of the third integer $n'$ digit-wise to the $m$-ary representation of $s$ to yield a recoded representation of n.

In a third aspect, the invention is directed to a computer program product storing instructions that, when executed by a processor, performs the method of the first aspect of the invention.

## BRIEF DESCRIPTION OF THE DRAWINGS

Preferred features of the present invention will now be described, by way of non-limiting example, with reference to the accompanying drawings, in which:

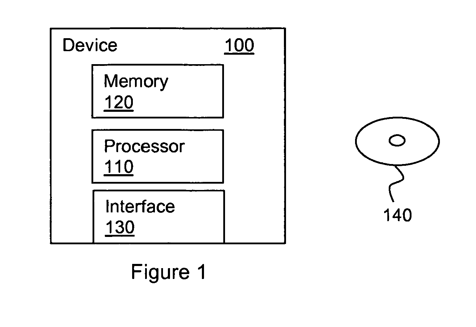

Figure 1 illustrates a device for digit recoding according to a preferred embodiment of the invention.

In the Figure, the represented blocks are functional entities, which do not necessarily correspond to physically separate entities. These functional entities may be implemented as hardware, software, or a combination of software and hardware; furthermore, they may be implemented in one or more integrated circuits.

## PREFERRED EMBODIMENT OF THE INVENTION

Figure 1 illustrates a device 100 for recoding digits, in particular digits of an exponent to be used in an exponentiation algorithm. The device 100 comprises at least one processor 110 (hereinafter "processor") adapted to execute a computer program that performs the calculations of the recoding algorithm of any of the embodiments described hereinafter. It should be noted that the processor 110 may also be implemented in hardware, or a combination of software and hardware. The device 100 further comprises a memory 120 adapted to store data, such as for example intermediate calculation results from the processor 110. The device 100 also comprises at least one interface 130 (hereinafter "interface") for interaction with other devices (not shown). Figure 1 further illustrates a computer program product 140, such as for example a CD-ROM, storing a computer program that, when executed by the processor 110 performs recoding algorithms according to any of the two embodiments of the method of the invention.

In exponentiation, $z = x^n$ is computed for an integer $n$ and an element $x$ in a (multiplicatively written) group. Let

$$n = \sum_{i=0}^{l-1} d_i m^i$$, where $l$ is the $m$-ary length of $n$, denote the expansion of $n$ in radix $m$ (typically $m = 2^k$). Take a positive integer $s < n$ and define $n' := n - s$. If $n' = \sum_{i=0}^{l-1} d'_i m^i$ and $s = \sum_{i=0}^{l-1} s_i m^i$ respectively denote the $m$-expansion of

$n'$ and $s$, it follows that $x^n = x^{n'+s}$, where $n'+s = \sum_{i=0}^{l-1} k_i m^i$, where in turn $k_i = d'_i + s_i$.

If we define the most significant digit of $s$ in radix $m$ to be zero, then the most significant digit of $n'$ in radix $m$ (i.e. $k_{l-1}$) will remain greater than, or equal to, zero. If this were not the case, then the recoding would not be unsigned and would thus not be suitable for groups where computing inversions are expensive.

First preferred embodiment

Let $\alpha$ be an integer satisfying $0 < \alpha < m$.

Choose $s = \sum_{i=0}^{l-2} \alpha\, m^i = \alpha\, \dfrac{m^{l-1} - 1}{m - 1}$. This may be seen as setting all digits of $s$ to the same value, i.e.

$\alpha$. Since $n'_i \in \{0,...,m-1\}$, it follows that $k_i \in \{\alpha,...,\alpha + (m-1)\}$. The following algorithm may then be used for the recoding.

Input: $n \geq 1$, $m = 2^k$, $l$ (the $m$-ary length of $n$).

Output: $n = (k_{l-1},...k_0)m$ with $k_i \in \{\alpha,...,\alpha + (m-1)\}$, $0 \leq i \leq l-2$

## Algorithm:

$$s \leftarrow \alpha\, \frac{m^{l-1} - 1}{m - 1}\ \text{and}\ n \leftarrow n - s$$

$$\textbf{for}\ i = 0\ \textbf{to}\ l - 2\ \textbf{do}$$

$$d \leftarrow n \bmod m$$

$$n \leftarrow \lfloor n/m \rfloor$$

$$k_i \leftarrow d + \alpha$$

$$\textbf{end}$$

$$k_{l-1} \leftarrow n$$

A first preferred choice for $\alpha$ is 1, as it leads to smaller values for recoded digits. A second preferred choice for $\alpha$ is $m - 1$, since this gives $s = m^{l-1}$ (i.e. a succession of $k(l-1)$ set to 1).

Two examples will now illustrate the first preferred embodiment. For the two examples the parameters take the following values:

$k = 2$

$m = 4$

$n = 73 = (1,0,2,1)_4 = 1 \cdot 4^0 + 2 \cdot 4^1 + 0.4^2 + 1 \cdot 4^3$

$l = 4$

In the first example $\alpha = 1$; in the second example $\alpha = m - 1 = 3$.

First example ($\alpha = 1$) for the first embodiment

$$s := \alpha \frac{m^{l-1} - 1}{m - 1} = 1 \frac{4^{4-1} - 1}{4 - 1} = \frac{4^3 - 1}{3} = \frac{63}{3} = 21$$

n := n - s = 73 - 21 = 52

loop: for $i = 0$ to $l$ - 2, i.e. for $i = 0$ to 2

    $i = 0$:

        $d := n \bmod m = 52 \bmod 4 = 0$

        $n := n/m = 52/4 = 13$

        $k_0 := d + \alpha = 0 + 1 = 1$

    $i = 1$:

        $d := n \bmod m = 13 \bmod 4 = 1$

        $n := n/m = 13/4 = 3$

        $k_1 := d + \alpha = 1 + 1 = 2$

    $i = 2$:

        $d := n \bmod m = 3 \bmod 4 = 3$

        $n := n/m = 3/4 = 0$

        $k_2 := d + \alpha = 3 + 1 = 4$

    $k_3 := n = 0$

    $k = (k_3, k_2, k_1, k_0) = (0,4,2,1)$

$$n = \sum_{i=0}^{l-1} k_i m^i = 1 \cdot 4^0 + 2 \cdot 4^1 + 4 \cdot 4^2 + 0 \cdot 4^3 = 1 \cdot 1 + 2 \cdot 4 + 4 \cdot 16 = 1 + 8 + 64 = 73$$

As expected, the recoded $n$ is equal to the original $n$.

Second example ($\alpha = m$ - 1 = 3) for the first embodiment

$$s := \alpha \frac{m^{l-1} - 1}{m - 1} = m^{l-1} - 1 = 4^3 - 1 = 63$$

$n := n$ - $s = 73 - 63 = 10$

loop: for $i = 0$ to $l$ - 2, i.e. for $i = 0$ to 2

    $i = 0$:

        $d := n \bmod m = 10 \bmod 4 = 2$

        $n := n/m = 10/4 = 2$

$k_0 := d + \alpha = 2 + 3 = 5$

$i = 1$:

$d := n \bmod m = 2 \bmod 4 = 2$
$n := n/m = 2/4 = 0$
$k_1 := d + \alpha = 2 + 3 = 5$

$i = 2$:

$d := n \bmod m = 0 \bmod 4 = 0$
$n := n/m = 0/4 = 0$
$k_2 := d + \alpha = 0 + 3 = 3$

$k3 := n = 0$
$k = (k_3, k_2, k_1, k_0) = (0,3,5,5)$

$$n = \sum_{i=0}^{l-1} k_i m^i = 5 \cdot 4^0 + 5 \cdot 4^1 + 3 \cdot 4^2 + 0 \cdot 4^3 = 5 \cdot 1 + 5 \cdot 4 + 3 \cdot 16 = 5 + 20 + 48 = 73$$

As expected, the recoded $n$ is once more equal to the original n.

It should be noted that the algorithm according to the first embodiment is simple to implement, but that it requires knowledge of the $m$-ary length of $n$ (i.e. of $l$) ahead of time. As this may be a drawback, a second preferred embodiment overcomes this problem, while it is a little bit more complicated to implement.

Second preferred embodiment

If one looks in more detail at the subtraction step, $n' := n - s$, one may set up the following equations $d'_i = (d_i - s_i + \gamma_i) \bmod m$ and $\gamma_{i+1} = \left\lfloor \dfrac{d_i - s_i + \gamma_i}{m} \right\rfloor \in \{-1,0\}$ where the "borrow" is initialised to 0, i.e. $\gamma_0 = 0$. This is the classical subtraction algorithm learnt at school. Since $d_i, s_i \in \{0,...,m-1\}$, this gives $k_i = d'_i + s_i$ which is equal to $d_i + \gamma_i$, if $d_i + \gamma_i \geq s_i$, and $d_i + \gamma_i + m$ otherwise.

Hence, for any choice of $s_i \neq 0$ when $d_i \in \{0,1\}$ leads to a non-zero value for $k_i$. As in the first preferred embodiment, $s = \sum_{i=0}^{l-2} \alpha m^i$ for some $0 < \alpha < m$. Further, to use only unsigned arithmetic, $\gamma'_i = \gamma_i + 1 \in \{0,1\}$:

$$\gamma'_i = \gamma_i + 1 = \left\lfloor \frac{d_i - s_i + \gamma_i}{m} \right\rfloor + 1 = \left\lfloor \frac{d_i - s_i + \gamma_i + m}{m} \right\rfloor = \left\lfloor \frac{d_i - s_i + \gamma'_i - 1 + m}{m} \right\rfloor$$

Input: $n \geq 1$, $m = 2^k$, $0 < \alpha < m$
Output: $n = (k_{l-1} \, .... \, k_0)_m$ with $k_i \in \{\alpha,...,\alpha+(m-1)\}$, $0 \leq i \leq l - 2$

Algorithm:

$i \leftarrow 0$; $\gamma' \leftarrow 1$

**while** $n \geq (m + \alpha)$ **do**

$d \leftarrow n \bmod m$

$$d' \leftarrow d + \gamma' + m - \alpha - 1$$

$$k_i \leftarrow (d' \bmod m) + \alpha$$

$$\gamma' \leftarrow \lfloor d'/m \rfloor$$

$$n \leftarrow \lfloor n/m \rfloor$$

$$i \leftarrow i + 1$$

**end**

$k_i \leftarrow n + \gamma' - 1$

As in the first preferred embodiment, preferred choices for $\alpha$ are 1 and $m - 1$.

Two examples will now illustrate the second preferred embodiment. For the two examples the parameters take the following values:

$k = 2$

$m = 4$

$n = 73 = (1,0,2,1)_4 = 1 \cdot 4^0 + 2 \cdot 4^1 + 0 \cdot 4^2 + 1 \cdot 4^3$

In the first example $\alpha = 1$; in the second example $\alpha = m - 1 = 3$.

First example ($\alpha = 1$) for the second embodiment

$i := 0$

$\gamma' = 1$

$n = 73 \geq (m + \alpha) = 4 + 1 = 5$, so the while-loop is executed

$d := n \bmod m = 73 \bmod 4 = 1$
$d' := d + \gamma' + m - \alpha - 1 = 1 + 1 + 4 - 1 - 1 = 4$
$k_0 := (d' \bmod m) + \alpha = (4 \bmod 4) + 1 = 0 + 1 = 1$
$\gamma' := d'/m = 4/4 = 1$
$n := n/m = 73/4 = 18$
$i := i + 1 = 0 + 1 \ 1 = 1$

$n = 18 \geq (m + \alpha) = 4 + 1 = 5$, so the while-loop is executed again

$d := n \bmod m = 18 \bmod 4 = 2$
$d' := d + \gamma' + m - \alpha - 1 = 2 + 1 + 4 - 1 = 5$
$k_1 := (d' \bmod m) + \alpha = (5 \bmod 4) + = 1 + 1 = 2$
$\gamma' := d'/m = 5/4 = 1$
$n := n/m = 18/4 = 4$
$i := i + 1 = 1 + 1 = 2$

$n = 4 < (m + \alpha) = 4 + 1 = 5$, so the while-loop is NOT executed again
$k_2 := n + \gamma' - 1 = 4 + 1 - 1 = 4$

As expected, the recoded $n$ is equal to the original n.

Second example ($\alpha = m - 1 = 3$) for the second embodiment

$i := 0$

$\gamma' = 1$

$n = 73 \geq (m + \alpha) = 4 + 3 = 7$, so the while-loop is executed

$d := n \bmod m = 73 \bmod 4 = 1$
$d' := d + \gamma' + m - \alpha - 1 = 1 + 1 + 4 - 3 - 1 = 2$

$k_0 := (d' \bmod m) + \alpha = (2 \bmod 4) + 3 = 2 + 3 = 5$
$\gamma := d'/m = 2/4 = 0$
$n := n/m = 73/4 = 18$
$i := i + 1 = 0 + 1 = 1$

$n = 18 \geq (m + \alpha) = 4 + 1 = 5$, so the while-loop is executed again

$d := n \bmod m = 18 \bmod 4 = 2$
$d' := d + \gamma + m - \alpha - 1 = 2 + 0 + 4 - 3 - 1 = 2$
$k_1 := (d' \bmod m) + \alpha = (2 \bmod 4) + 3 = 2 + 3 = 5$
$\gamma := d'/m = 2/4 = 0$
$n := n/m = 18/4 = 4$
$i := i + 1 = + 1 = 2$

$n = 4 < (m + \alpha) = 4 + 1 = 5$, so the while-loop is NOT executed again
$k_2 := n + \gamma - 1 = 4 + 0 - 1 = 3$
$k = (k_3, k_2, k_1, k_0) = (0,3,5,5)$

$$n = \sum_{i=0}^{l-1} k_i m^i = 5 \cdot 4^0 + 5 \cdot 4^1 + 3 \cdot 4^2 + 0 \cdot 4^3 = 5 \cdot 1 + 5 \cdot 4 + 3 \cdot 16 = 5 + 20 + 48 = 73$$

As expected, the recoded $n$ is equal to the original n.

It will be appreciated that both embodiments as expected give the same recoded digits for the same input. For example the first example gives (4,2,1) for both embodiments, while the second embodiment gives (3,5,5) for both embodiments.

It will also be appreciated that both embodiments are regular, as there are no tests inside the main loop; in the first embodiment, there is no test inside the for loop, and in the second embodiment, there is no test inside the while loop.

It may thus be appreciated that the present invention enables regular recoding of a positive integer.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

**Claims**

1. A regular method for recoding a first positive integer $n$ being the exponent of a cryptographic exponentiation algorithm, the method comprising the steps, in a processor (110), of:

   choosing a second integer $s$ smaller than $n$;
   defining a third integer $n' = n - s$;
   adding, for a fourth integer m, the $m$-ary representation of the third integer $n'$ digit-wise to the $m$-ary representation of $s$ to yield a recoded representation of $n$.

2. The method of claim 1, wherein $m = 2^k$

3. The method of claim 1 or 2, wherein $s = \sum_{i=0}^{l-2} s_i m^i$, where $l$ denotes the $m$-ary length of $n$.

4. The method of claim 3, wherein $s_i = \alpha$ for some $0 < \alpha < m$.

5. The method of claim 4, wherein $\alpha = 1$.

**6.** The method of claim 4, wherein $\alpha = m -1$.

**7.** A device (100) for regularly recoding a first positive integer $n$, being the exponent of a cryptographic exponentiation algorithm, the device comprising a processor (110) adapted to:

choose a second integer $s$ smaller than $n$;
define a third integer $n' = n - s$;
add, for a fourth integer $m$, the $m$-ary representation of the third integer $n'$ digit-wise to the $m$-ary representation of $s$ to yield a recoded representation of n.

**8.** A computer program product (140) storing instructions that, when executed by a processor, performs the method of any of claims 1-6.

**Patentansprüche**

**1.** Reguläres Verfahren zum Recodieren einer ersten positiven ganzen Zahl n, die der Exponent eines kryptographischen Potenzierungsalgorithmus ist, wobei das Verfahren die folgenden Schritte in einem Prozessor (110) umfasst:

Wählen einer zweiten ganzen Zahl s, kleiner als n;
Definieren einer dritten ganzen Zahl n' = n - s;
für eine vierte ganze Zahl m, Addieren der m-adischen Darstellung der dritten ganzen Zahl n' ziffernweise zu der m-adischen Darstellung von s, um eine recodierte Darstellung von n zu ergeben.

**2.** Verfahren nach Anspruch 1, bei dem m = $2^k$ ist.

**3.** Verfahren nach Anspruch 1 oder 2, bei dem $s = \sum_{i=0}^{1-2} s_i m^i$ ist, wobei 1 die m-adische Länge von n bezeichnet.

**4.** Verfahren nach Anspruch 3, bei dem $s_i = \alpha$ für ein gewisses $0 < \alpha < m$ ist.

**5.** Verfahren nach Anspruch 4, bei dem $\alpha = 1$ ist.

**6.** Verfahren nach Anspruch 4, bei dem $\alpha = m - 1$ ist.

**7.** Vorrichtung (100) zum regulären Recodieren einer ersten positiven ganzen Zahl n, die der Exponent eines kryptographischen Potenzierungsalgorithmus ist, wobei die Vorrichtung einen Prozessor (110) umfasst, der ausgelegt ist zum:

Wählen einer zweiten ganzen Zahl s, kleiner als n;
Definieren einer dritten ganzen Zahl n' = n - s;
für eine vierte ganze Zahl m, Addieren der m-adischen Darstellung der dritten ganzen Zahl n' ziffernweise zu der m-adischen Darstellung von s, um eine recodierte Darstellung von n zu ergeben.

**8.** Computerprogrammprodukt (140), das Anweisungen speichert, das, wenn es durch einen Prozessor ausgeführt wird, das Verfahren nach einem der Ansprüche 1-6 ausführt.

**Revendications**

**1.** Procédé régulier pour le recodage d'un premier entier positif n exposant d'un algorithme de chiffrement d'exponentiation, comprenant, dans un processeur (110), les étapes de :

sélection d'un second entier s inférieur à n ;
définition d'un troisième entier n' = n - s ;
ajout, pour un quatrième entier m, de la représentation de modulation de phase M-aire du troisième entier n' de manière chiffrée à la représentation de modulation de phase M-aire de s afin de générer un représentation recodée de n.

**2.** Procédé selon la revendication 1, dans lequel $m = 2^k$

**3.** Procédé selon la revendication 1 ou 2, dans lequel $s = \sum_{i=0}^{l-2} s_i m^i$ , où $l$ désigne la longueur de modulation de phase M-aire de n.

**4.** Procédé selon la revendication 3, dans lequel $s_i = \alpha$ pour $0 < \alpha < m$.

**5.** Procédé selon la revendication 4, dans lequel $\alpha = 1$.

**6.** Procédé selon la revendication 4, dans lequel $\alpha = m - 1$.

**7.** Appareil (100) pour le recodage régulier d'un entier positif n, étant l'exposant d'un algorithme de chiffrement d'exponentiation, comprenant un processeur (110) adapté pour :

sélectionner un second entier s inférieur à n ;
définir un troisième entier n' = n - s ;
ajouter, pour un quatrième entier m, la représentation de modulation de phase M-aire du troisième entier n' de manière chiffrée à la représentation de modulation de phase M-aire de s pour générer une représentation recodée de n'.

**8.** Produit de programme informatique (140) stockant des instructions qui, lorsqu'elles sont exécutées par un processeur, réalisent le procédé selon l'une quelconque des revendications 1 à 6.

| Device | 100 |
|---|---|
| Memory 120 | |
| Processor 110 | |
| Interface 130 | |

140

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Differential Power Analysis. Advances in Cryptology - CRYPTO '99, volume 1666 of Lecture Notes in Computer Science. Springer Verlag, 1999, vol. 1666, 388-397
- Electromagnetic Analysis: Concrete Results. **Karine Gandolfi ; Christophe Mourtel ; Francis Olivier.** Cryptographic Hardware and Embedded Systems - CHES 2001, volume 2162 of Lecture Notes in Computer Science. Springer Verlag, 2001, vol. 2162, 251-261
- Electromagnetic Analysis (EMA): Measures and Counter-Measures for Smart Cards. **Jean-Jacques Quisquater ; David Samyde.** Programming and Security (E-Smart 2001), volume 2140 of Lecture Notes in Computer Science. Springer Verlag, 2001, vol. 2140, 200-210
- Elliptic Curves in Cryptography. **Ian Blake ; Gadiel Seroussi ; Nigel Smart.** London Mathematical Society Lecture Note Series. Cambridge University Press, 1999, vol. 265
- The Art of Computer Programming. **Donald E. Knuth.** Seminumerical Algorithms. Addison-Wesley, 1981, vol. 2
- Parallelizable Elliptic Curve Point Multiplication Method with Resistance against Side-Channel Attacks. **Bodo Möller.** Information Security (ISC 2002), volume 2433 of Lecture Notes in Computer Science. Springer Verlag, 2002, vol. 2433, 402-413
- Fractional Windows Revisited: Improved Signed-Digit Representation for Efficient Exponentiation. **Bodo Möller.** Information Security and Cryptology - ICISC 2004, volume 3506 of Lecture Notes in Computer Science. Springer Verlag, 2004, vol. 3506, 137-153
- A More Flexible Countermeasure against Side-Channel Attacks Using Window Method. **Katsuyuki Okeya ; Tsuyoshi Takagi.** Cryptographic Hardware and Embedded Systems - CHES 2003, volume 2779 of Lecture Notes in Computer Science. Springer Verlag, 2003, vol. 2779, 397-410
- The Width-w NAF method Provides Small Memory and Fast Elliptic Scalar Multiplications Secure against Side-Channel Attacks. **Katsuyuki Okeya ; Tsuyoshi Takagi.** Topics in Cryptology - CT-RSA 2003, volume 2612 of Lecture Notes in Computer Science. Springer Verlag, 2003, vol. 2612, 328-342
- A New Attack with Side Channel Leakage During Exponent Recoding Computations. **Yasuyuki Sakai ; Kouichi Sakurai.** Cryptographic Hardware and Embedded Systems - CHES 2004, volume 3156 of Lecture Notes in Computer Science. Springer Verlag, 2004, vol. 3156, 298-311
- Resistance against Differential Power Analysis for Elliptic Curve Cryptosystems. **Jean-Sébastien Coron.** Cryptographic Hardware and Embedded Systems - CHES '99, volume 1717 of Lecture Notes in Computer Science. Springer Verlag, 1999, vol. 1717, 292-302
- Timing Attacks on Implementations of Diffie-Heliman, RSA, DSS, and Other Systems. **Paul Kocher.** Advances in Cryptology - CRYPTO '96, volume 1109 of Lecture Notes in Computer Science. Springer Verlag, 1996, vol. 1109, 104-113
- Securing Elliptic Curve Point Multiplication against Side-Channel Attacks. **Bodo Möller.** Information Security (ISC 2001), volume 2200 of Lecture Notes in Computer Science. Springer Verlag, 2001, vol. 2200, 324-334
- Flexible Exponentiation With Resistance to Side Channel Attacks. **Camille Vuillaume ; Katsuyuki Okeya.** Applied Cryptography and Network Security - ACNS 2006, volume 3989 of Lecture Notes in Computer Science. Springer Verlag, 2006, vol. 3989, 268-283